Europäisches Patentamt

(19) European Patent Office

Office européen des brevets

(11) Veröffentlichungsnummer: **0 175 941**
**B1**

(12) **EUROPÄISCHE PATENTSCHRIFT**

(45) Veröffentlichungstag der Patentschrift :
23.11.89

(21) Anmeldenummer : 85110659.1

(22) Anmeldetag : 24.08.85

(51) Int. Cl.⁴ : **G 11 B 20/10**, G 11 B 27/28,
G 11 B 20/12, G 11 B 20/22

(54) **Vorrichtung und Verfahren zum Herstellen und wahlweisen Ausgleichen einer zeitlichen Beziehung zwischen digitalen Signalfolgen.**

(30) Priorität : 21.09.84 CH 4526/84

(43) Veröffentlichungstag der Anmeldung :
02.04.86 Patentblatt 86/14

(45) Bekanntmachung des Hinweises auf die Patenterteilung : 23.11.89 Patentblatt 89/47

(84) Benannte Vertragsstaaten :
AT BE CH DE FR GB IT LI NL SE

(56) Entgegenhaltungen :
EP-A- 0 148 413
FR-A- 2 514 542
NASA TECHBRIEF, Ref.Nr. GSC-12727, Transport
Control for High-Density Digital Recorder"
PATENT ABSTRACTS OF JAPAN, Band 7, Nr. 38 (P-
176)[1183], 16. Februar 1983; & JP - A - 57 189 327
(KAGUKU) 20.11.1982
JOURNAL OF ELECTRONIC ENGINEERING, Band 20,
Nr. 195, März 1983, Seiten 55-58, Tokyo, JP; H.
YAMAUCHI "Digital Audio Reproduction Technology
Helps Revive Market Interest"
BKSTS JOURNAL, Nr. 4, April 1984, Seiten 162-167,
London, GB; J.R. WATKINSON "DASH Format and
the PCM-3324"

(73) Patentinhaber : WILLI STUDER AG Fabrik für elektronische Apparate
Althardstrasse 30
CH-8105 Regensdorf ZH (CH)

(72) Erfinder : Lagadec, Roger, Dr.
Schulstrasse 22
CH-8153 Rümlang ZH (CH)

## Beschreibung

Die Erfindung bezieht sich auf ein Verfahren und eine Vorrichtung zum Herstellen und wahlweisen Ausgleichen einer zeitlichen Beziehung zwischen verschiedenen Signalfolgen von digitalen Signalen.

Digitale Signalverarbeitungsstufen bewirken oft Signalverzögerungen, weil sie mit Verzögerungsgliedern arbeiten. Wird beispielsweise ein digitales Audiosignal von einem Aufzeichnungsträger gelesen, in einem Mischpult mit einem anderen Signal gemischt oder sonstwie verändert und wieder auf dem Aufzeichnungsträger aufgezeichnet, so ist es zeitlich gegenüber der ursprünglichen Aufzeichnung versetzt. Der Grund dafür liegt in der Umwandlung des digitalen Signales in ein analoges Signal und umgekehrt, wenn ein analog arbeitendes Mischpult verwendet wird. Bei Verwendung eines digital arbeitenden Mischpultes liegt der Grund für die Verzögerung nicht in der genannten Umwandlung, sondern in der digitalen Verarbeitung der Signale im Mischpult an sich. Das zeitliche Ausrichten analoger Audiosignale wird in bekannter Weise mit Hilfe eines Zeitcode angestrebt. Dazu wird eine solche Zeitcode-Information auf einer eigenen Spur auf dem betreffenden Aufzeichnungsträger aufgezeichnet. Somit lassen sich mehrere Audiosignale mit Hilfe dieses Zeitcode relativ zueinander ausrichten.

Mangelhafte Ausrichtung zweier zusammengehörender Audiosignale, die auf verschiedenen Spuren auf einem Aufzeichnungsträger aufgezeichnet sind und gemeinsam abgehört werden, wird als störend empfunden. Diese mangelhafte Ausrichtung kann einerseits auf die genannten Verzögerungen bei der Verarbeitung digitaler Signale zurückgeführt werden. Andererseits ist weiter zu bedenken, dass digitale Audiosignale mit einer Abtastfrequenz aufgezeichnet werden, die wesentlich grösser ist als die Frequenz mit der ein Zeitcode digital aufgezeichnet wird. Diese beiden Frequenzen sind meistens nicht synchron zueinander. Dies, weil die Abtastfrequenz und die Frequenz des Zeitcodes oft nicht von demselben Taktgenerator abgeleitet ist. Dieser Umstand führt weiter dazu, dass der Zeitcode bei der Verarbeitung digitaler Audiosignale nicht für dieselben Steuerungsfunktionen herangezogen werden kann, wie dies bei der Verarbeitung analoger Audiosignale üblich ist. Beispielsweise ist eine Editieroperation mit Hilfe des Zeitcode bei digitalen Audiosignalen nur ungenau auszuführen. Weil das digitale Audiosignal und das Zeitcodesignal meistens nicht synchron sind, lassen sich Verzögerungen zweier parallel auftretender digitaler Audiosignale auch nicht relativ zu einem gemeinsamen Zeitcode angeben.

JP-A-57 189 327 beschreibt ein Verfahren zum Ausgleichen der zeitlichen Beziehungen zwischen auf einem magnetischen Träger aufgezeichneten Signalen, wobei Korrekturpulse dem Signal beigegeben werden, deren relative Verzögerungen beim Lesen detektiert werden.

Die Erfindung wie sie in den Ansprüchen gekennzeichnet ist, löst die Aufgabe ein Verfahren und eine Vorrichtung zu schaffen, die eine zeitliche Beziehung zwischen zwei oder mehreren Signalfolgen herstellen, die zur Korrektur unterschiedlicher Verzögerungen der digitalen Signalfolgen verwendet werden können.

Die durch die Erfindung erreichten Vorteile sind im wesentlichen darin zu sehen, dass unterschiedliche Verzögerungen zwischen mehreren digitalen Signalfolgen auf einfache Weise erfasst und auch ausgeglichen werden können. Das genaue Ausrichten mehrerer digitaler Audiosignale auf mehreren Spuren desselben Aufzeichnungsträgers ist dadurch ermöglicht. Bewusst gewünschte Verzögerungen des einen digitalen Audiosignales gegenüber einem weiteren digitalen Audiosignal können auf diese Weise ebenfalls herbeigeführt werden.

Im folgenden wird die Erfindung anhand von lediglich einen Ausführungsweg darstellenden Zeichnungen näher erläutert. Es zeigt

Figur 1 eine schematische Darstellung eines Formates zur Aufzeichnung digitaler Audiosignale,

Figur 2 eine schematische Darstellung verschiedener Spuren auf einem Aufzeichnungsträger,

Figur 3 eine schematische Darstellung eines Teils einer Vorrichtung zum aufzeichnen digitaler Audiosignale auf einem bandförmigen Aufzeichnungsträger,

Figur 4 eine schematische Darstellung eines Teils einer Vorrichtung zum Wiedergeben digitaler Audiosignale von einem bandförmigen Aufzeichnungsträger und

Figur 5 einen Teil der Vorrichtung gemäss Figur 4.

Figur 6 einen weiteren Teil der Vorrichtung gemäss Figur 4.

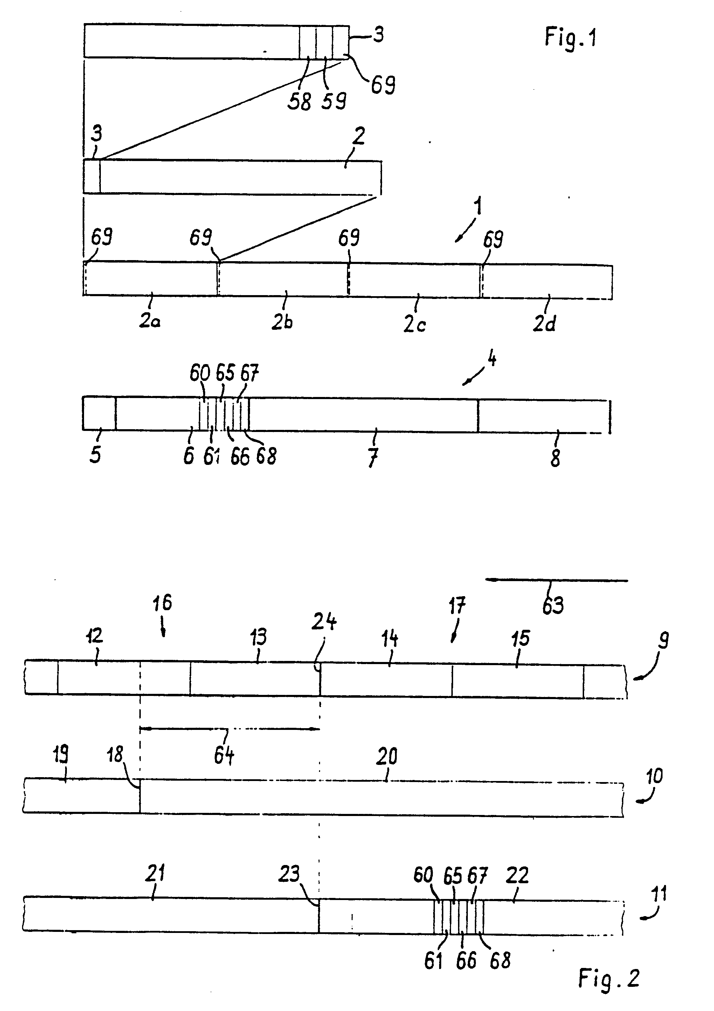

Obwohl die Erfindung nicht auf das Gebiet der Verarbeitung digitaler Audiosignale beschränkt ist, so wird sie doch nachfolgend am Beispiel der Verarbeitung digitaler Audiosignale näher erläutert. In Figur 1 ist deshalb in schematischer Darstellung ein Format angegeben, in welchem eine digitale Signalfolge zu dessen Aufzeichnung angeordnet ist. Das Format auf das wir uns hier beispielhalber beziehen ist unter der Bezeichnung DASH (Digital Audio Stationary Heads) dem Fachmann bekannt. In diesem Format werden die digitalen Daten zu Sektoren 1 zu je vier Blöcken 2a, 2b, 2c, 2d gruppiert. Jeder Block 2 besteht dabei aus 18 Wörtern zu je 16 Bit. Davon sind 12 Wörter Datenwörter die je einen Abtastwert einer Signalfolge darstellen. Am Anfang eines Blockes 2 ist ein Synchronisationswort (Syncwort) 3 vorgesehen. Dieses besteht in bekannter Weise aus 16 Bit. Auf einem bandförmigen Aufzeichnungsträger sind üblicherweise mehrere parallele Spuren mit derart formatierten Audiodaten vorgesehen. Gemäss dem DASH-Format ist auf dem bandförmigen Aufzeichnungsträger jeweils auch eine Referenzspur vorgesehen. Auf dieser sind Referenzworte 4 aneinandergereiht. Auf dem Aufzeichnungsträger beansprucht jedes Referenzwort 4 soviel Raum oder Zeit wie ein Sektor 1 auf den anderen Spuren. Ein solches Referenzwort 4 umfasst in bekannter Weise ein Synchronisationsmuster 5, ein Steuerungswort 6, eine Referenzadresse 7, und ein CRC-Wort 8. Das Steuerungswort 6 umfasst 16 Bit, die nicht mit den Bit der anderen Spuren direkt vergleichbar sind.

Figur 2 zeigt die Anordnung der Spuren auf einem bandförmigen Aufzeichnungsträger. Man erkennt eine Datenspur 9, eine Zeitcodespur 10 und eine Referenzspur 11. Auf der Datenspur 9 sind beispielsweise Blöcke 12, 13, 14 und 15 zu erkennen. Dabei gehören die Blöcke 12 und 13 zu einem ersten und die Blöcke 14 und 15 zu einem zweiten von zwei Sektoren 16 und 17. In der Zeitcodespur 10 ist eine Zeitcodewortgrenze 18 erkennbar. In Wirklichkeit ist diese Zeitcodewortgrenze 18 nichts anderes als die Trennstelle zwischen zwei aufeinanderfolgenden Zeitcodewörtern 19 und 20. Pro Sekunde werden üblicherweise 25, 30 oder 29.97 Zeitcodewörter zu je 80 Bit aufgezeichnet. In der Referenzspur 11 sind zwei aufeinanderfolgende Referenzwörter 21 und 22 erkennbar. Eine Trennstelle 23 zwischen den Referenzwörtern 21 und 22 stimmt örtlich und zeitlich mit einer Trennstelle 24 zwischen den Sektoren 16 und 17 in der Datenspur 9 überein.

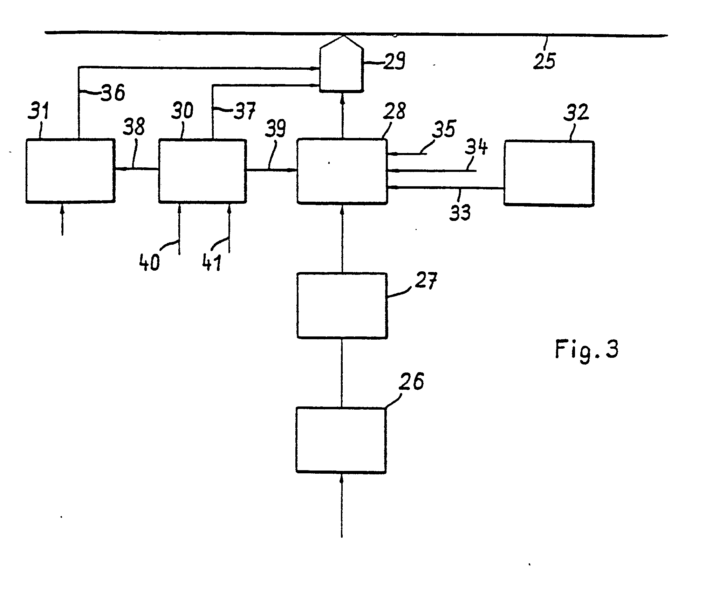

Figur 3 zeigt in schematischer Darstellung einen Teil einer Vorrichtung zur Aufzeichnung digitaler Audiosignale gemäss dem DASH-Format auf einem bandförmigen Aufzeichnungsträger 25. Dabei ist an sich bekannt wie digitale Audiosignale aus einem analogen Audiosignal abgeleitet werden. Dies alles geschehe in einer digitalen Audioelektronik 26. Dieser ist in ebenfalls bekannter Weise ein Codierer 27 nachgeschaltet. Daran angeschlossen ist ein Formatierer 28, der die codierten Audiosignale in bekannter Weise beispielsweise im DASH-Format formatiert. So formatierte Audiosignale werden mit einem Aufnahmekopf 29, der hier beispielsweise als Mehrspurkopf ausgebildet sei, auf dem Aufzeichnungsträger 25 aufgezeichnet. Neben dem Formatierer 28 ist einerseits ein Zeitcodegenerator 30 und ein Referenzgenerator 31 und andererseits eine Eingabeeinheit 32 vorgesehen. Als Eingabeeinheit 32 kann beispielsweise eine Tastatur, eine Verzögerungsmesseinrichtung oder ein anderes geeignetes Gerät vorgesehen sein. Die Eingabeeinheit 32 ist über eine Leitung oder einen Bus 33 mit dem Formatierer 28 verbunden. Dieser hat in an sich bekannter Weise weitere Eingänge 34 für Blockadressen und 35 für ein Taktsignal. Die Generatoren 31 und 32 sind über Leitungen 36 und 37 mit dem Aufnahmekopf 29 verbunden. Je eine Leitung 38 und 39 verbindet den Zeitcodegenerator 30 mit dem Referenzgenerator 31 und mit dem Formatierer 28. Der Zeitcodegenerator 30 weist weitere Eingänge 40 und 41 beispielsweise für ein Taktsignal aus einer anderen Vorrichtung gleicher Art oder aus einem externen Taktsignalgenerator auf.

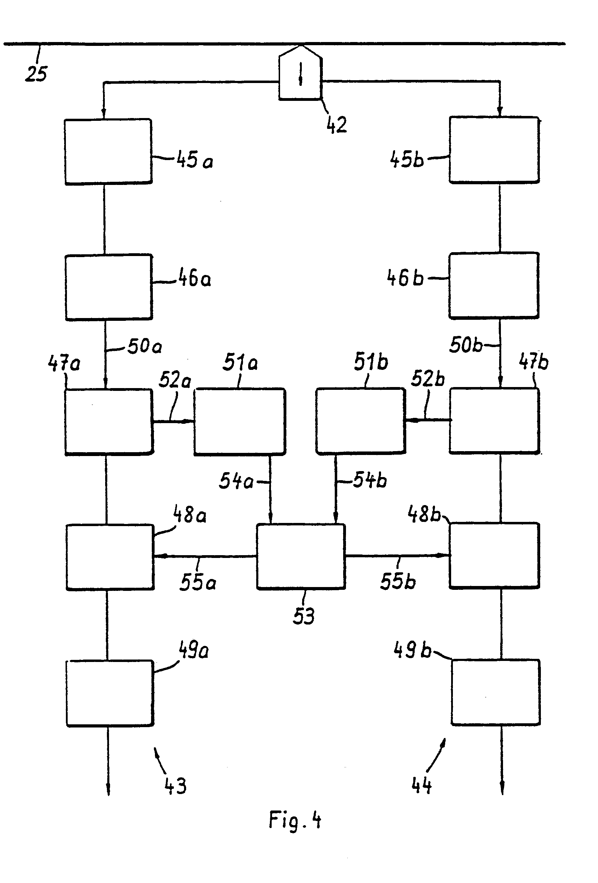

Figur 4 zeigt eine Vorrichtung zur Wiedergabe von digitalen Signalen, beispielsweise von Audiosignalen die auf einem bandförmigen Aufzeichnungsträger 25 aufgezeichnet sind. Für das gezeigte Beispiel weise der Aufzeichnungsträger 25 zwei Datenspuren 9, wie in Figur 2 gezeigt mit Audiodaten auf. Der Aufzeichnungsträger 25 weist ferner die üblichen Zeitcode-und Referenzspuren 10 und 11 auf. Ein Lesekopf 42 sei dazu als Mehrspurkopf ausgebildet und somit in der Lage alle Spuren zu lesen. Da zwei Datenspuren zu lesen sind, sind auch zwei Wiedergabekanäle 43 und 44 vorzusehen. Jeder Wiedergabekanal 43 und 44 weist dabei ausgehend vom Lesekopf 42 der Reihe nach einen Verstärker 45a, 45b, eine Korrekturschaltung 46a, 46b, einen Sync-Detektor 47a, 47b, eine Verzögerungseinheit 48a, 48b sowie die übliche, mit 49a und 49b bezeichnete Audioelektronik auf, die das digitale Audiosignal zu einem analogen Audiosignal umwandelt. Alle diese Schaltungen sind durch eine Leitung 50a und 50b untereinander verbunden. Parallel zum Sync-Detektor 47a und 47b ist je ein Verzögerungs-Deformatierer 51a und 51b über je eine Leitung 52a und 52b diesem zugeschaltet. Beiden Wiedergabekanälen 43 und 44 gemeinsam ist eine Verzögerungssteuerung 53. Diese ist je über eine Leitung 54a und 54b mit den Deformatierern 51a und 51b, sowie über Leitungen 55a und 55b mit den Verzögerungseinheiten 48a und 48b verbunden. Verstärker 45a, 45b, Korrekturschaltungen 46a, 46b und Sync-Detektoren sind an sich bekannte Bauelemente eines solchen Wiedergabekanales 43 und 44. Dasselbe gilt für die Verzögerungs-Deformatierer 51a und 51b. Diese sind lediglich so programmiert, dass sie nur einen Teil der Sync-Wörter 3 in an sich bekannter Weise deformatieren. Als Verzögerungseinheiten 48a und 48b werden bekannte Speicherelemente (RAM) verwendet, deren Speicherplätze durch Adressen aus der Verzögerungssteuerung 53 angesteuert werden.

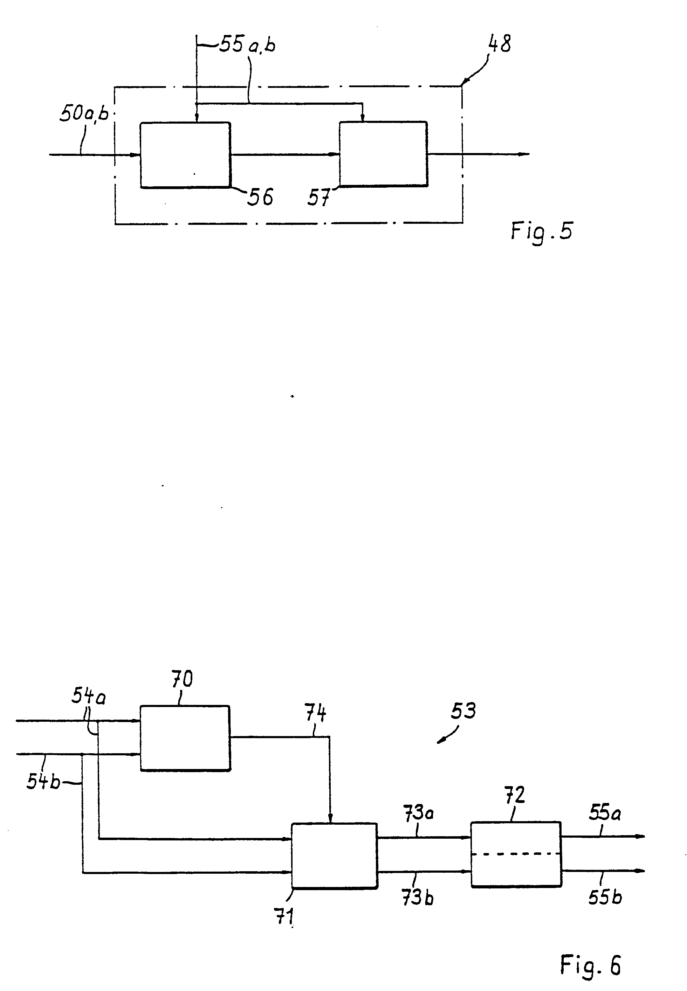

Figur 5 zeigt schematisch den Aufbau der Verzögerungseinheit 48a, 48b. Diese besteht aus einer Serieschaltung eines bekannten Speichers (RAM) 56 und einer Recheneinheit 57. Vorzugsweise ist die Recheneinheit 57 als digitales Filter ausgebildet.

Figur 6 zeigt schematisch ein Beispiel eines möglichen Aufbaus der Verzögerungssteuerung 53. Diese besteht aus einer Auswerteeinheit 70, einer Addiereinheit 71 und einem Filter 72. Dabei werden die Leitungen 54a und 54b sowohl an die Auswerteeinheit 70 wie auch an die Addiereinheit 71 angeschlossen. Diese weist ebenfalls soviele Ausgänge 73a, 73b auf, wie die Vorrichtung Wiedergabekanäle 43 und 44 aufweist. Die Ausgänge 73a, 73b münden in das digitale Filter 72 von dem die Leitungen 55a und 55b ausgehen.

Zum Herstellen einer zeitlichen Beziehung zwischen zwei verschiedenen digitalen Signalfolgen wie zum Beispiel einer Folge von Audiosignalen wie sie auf einer Datenspur 9 auftritt und einer Folge von Zeitcodesignalen wie sie auf einer Zeitcodespur 10 auftritt, gibt es mehrere Möglichkeiten. Eine Möglichkeit besteht darin, den Audiodaten eine Information beizugeben, die eine zeitliche Beziehung zwischen den Audiodaten und dem Zeitcode angibt. Eine solche Information wird beispielsweise als Zeitcodemarkierung bezeichnet. Die Zeitcodemarkierung markiert bestimmte Stellen auf der Datenspur 9 auf welche die Zeitcodemarkierungen sich beziehen. Zeitcodemarkierungen sind digitale Daten, welche beispielsweise von einem digital arbeitenden Audiosystem verarbeitet oder getragen werden und eine zeitliche Beziehung herstellen zu einem weiteren System welches zeitbezogen ist, wie zum Beispiel einem Zeitcode. Es kann angenommen werden, dass jedes digital arbeitende Audiosystem mit einem Format arbeiten wird, das auf Wörtern und Blöcken von Wörtern aufgebaut ist. Dies insbesondere auch für andere Formate als das DASH-Format. Diese Formate haben fast zwangsläufig eine Frequenz, als Häufigkeit der auftretenden Blöcke betrachtet, die grösser ist als die Frequenz der Wörter eines Zeitcode. Allgemein kann man zum Beispiel bei der Aufzeichnung digitaler Audiodaten von Intervallen sprechen. Ein Intervall bedeutet dabei im DASH-Format einen Block oder einen Sektor. In dem ebenfalls sehr bekannten AES/EBU-Digital Audio Interface ist ein Intervall gleichzusetzen mit einem Uebertragungsblock.

Ist nur eine grobe Auflösung gefordert, so gibt eine Zeitcodemarkierung lediglich an, dass ein bestimmtes Intervall, also beispielsweise der Block 12 (Fig. 2) mit einer Zeitcodewortgrenze 18 zeitlich oder örtlich zusammenfällt. Die Genauigkeit einer solchen Zeitcodemarkierung entspricht einem Intervall. Eine solche Zeitcodemarkierung kann im DASH-Format jedem Sektor 1, 16, 17 zugeordnet werden. Dies geschieht vorzugsweise im vierzehnten und fünfzehnten Bit des Sync-Wortes 3, welche mit Bezugsziffern 58 und 59 versehen sind. Dabei kann durch die geeignete Kombination der zwei Bit angegeben werden ob eine Zeitcodemarkierung in diesem Sektor vorkommt und welches die Frequenz des Zeitcodes ist. Dabei könnte beispielsweise die Bitkombination 00 bedeuten, dass in dem betreffenden Sektor kein neues Zeitcodewort 19 oder 20 beginnt. Die Bitkombination 01 würde bedeuten, dass ein Zeitcodewort in diesem Sektor beginnt und dass die Frequenz der Zeitcodewörter 25 Hz beträgt. Die Bitkombination 10 würde bedeuten, dass ein Zeitcodewort beginnt und dass deren Frequenz 30 Hz beträgt. Die Bitkombination 11 würde bedeuten, dass ein Zeitcodewort beginnt und dass deren Frequenz 29.97 Hz beträgt. Zusätzlich kann die Zeitcodemarkierung auf der Referenzspur 11 eingetragen werden. Im DASH-Format geschieht dies im Steuerungswort 6 im elften und zwölften Bit, welche mit Bezugszeichen 60 und 61 versehen sind. Mit anderen Worten gibt die Information in den Bit 60, 61 sowie 58, 59 an ob im Zeitintervall, das dem vorausgehenden Sektor 16 entspricht, eine Zeitcodewortgrenze 18 aufgetreten ist, wenn man annimmt, dass der Aufzeichnungsträger in Richtung eines Pfeiles 63 bewegt wird. Wenn der Zeitcodegenerator 30 (Fig. 3) ein neues Zeitcodewort 20 (Fig. 2) zu schreiben beginnt, gibt er ein entsprechendes Signal über die Leitungen 38 und 39 an den Referenzwort-Generator 31 und an den Formatierer 28 ab. Mit diesem Signal ist diesen auch die Frequenz des Zeitcode bekannt. Somit können die beiden genannten Einheiten mit Hilfe dieses Signales die entsprechenden Bit 58, 59 und 60, 61 belegen.

Zeitcodemarkierungen können auch eine feinere Auflösung aufweisen. Dazu sollen die Zeitcodemarkierungen auch den örtlichen oder zeitlichen Abstand 64 zwischen dem Beginn eines Zeitcodewortes 20 und dem Beginn des nächsten Intervalles bzw Sektors 17 oder Referenzwortes 22 angeben. Dieser berechnete oder gemessene Abstand kann im DASH-Format auf der Referenzspur 11 im Steuerungswort 6 im dreizehnten bis sechszehnten Bit eingetragen werden, welche durch Bezugszeichen 65, 66, 67 und 68 gekennzeichnet sind. Falls diese Genauigkeit nicht genügt, kann man vier aufeinanderfolgende Sektoren zum Eintragen eines einzigen Abstandswertes benützen. In diesem Falle stehen zur Speicherung eines Abstandswertes 16 Bit zur Verfügung. Um den Abstand 64 zu messen wird beispielsweise im Formatierer 28 dann ein Zähler gestartet, wenn über Leitung 39 ein Signal eintrifft, das angibt, dass der Zeitcode-Generator 30 ein neues Zeitcodewort 20 beginnt. Durch Taktimpulse die der Formatierer 28 in an sich bekannter Weise über den Eingang 35 erhält, wird der Zähler betrieben. Wenn der gerade zu dieser Zeit formatierte Sektor 16 beendet ist, wird der Zähler gestoppt und der Zählerstand als Bit 65 bis 68 im Steuerungswort 6 des Referenzwortes 22 eingetragen.

Ist die zeitliche Verzögerung die eine erste Signalfolge gegenüber einer zweiten Signalfolge aufweist bekannt, so kann eine Information die diese Verzögerung darstellt der ersten Signalfolge beigegeben werden. Sind diese Signalfolgen im DASH-Format formatiert, so steht dafür beispielsweise das sechszehnte Bit 69 jedes Sync-Wortes 3 eines Blockes 2 in einem Sektor 1 zur Verfügung. Pro Sektor stehen somit vier Bit für eine Angabe über eine Verzögerung zur Verfügung. Eine solche Verzögerung kann beispielsweise über die Eingabeeinheit 32 eingegeben werden. Der Formatierer 28 verteilt dann die einzelnen Bit dieser Information auf aufeinanderfolgende Blöcke 2, beginnend mit dem nächsten Sektor. Die so angegebene Verzögerung gibt an, um wieviele Abtastintervalle und Bruchteile von Abtastintervallen die momentan wiedergegebenen Signale gegenüber ihrer ursprünglichen Position auf dem Band durch eine externe Signalverarbeitung verzögert wurden.

Werden nun zwei solche zueinander verzögerte Signalfolgen über einen Aufzeichnungsträger 25 einem Lesekopf 42, an den zwei Audio-Wiedergabekanäle 43 und 44 angeschlossen sind, zugeführt, so wird jede Signalfolge zuerst in an sich bekannter Weise in einem Verstärker 45a und 45b verstärkt. Dann werden die digitalen Signalen in

den Korrekturschaltungen (Equalizer) 46a und 46b korrigiert, beispielsweise wie dies in EP-A-0 148 413 beschrieben ist. In den Sync-Detektoren 47a und 47b werden die Sync-Wörter der einzelnen Blöcke 2 gelesen und davon jeweils das sechszehnte Bit über die Leitungen 52a und 52b den Verzögerungs-Deformatierern 51a und 51b zugeleitet. Diese sammeln die einzelnen Bit bis ein Wort entstanden ist. Diese Wörter werden anschliessend über die Leitungen 54a und 54b der Verzögerungssteuerung 53 zugeführt. Diese benützt die Daten für die Verzögerung die sie aus Leitung 54a erhält um die Verzögerungseinheit 48b zu steuern und umgekehrt. Auf diese Weise wird erreicht, dass die Summe der Verzögerungen für Signale in beiden Wiedergabekanälen 43 und 44 dieselbe ist. Das bedeutet, dass die Signale in beiden Wiedergabekanälen nach den Verzögerungseinheiten 48a und 48b zueinander ausgerichtet sind.

Die Verzögerungssteuerung 53 erhält über Leitungen 54a, 54b... die Werte der Verzögerungen, die jedes Signal erfahren hat, und jedem Signal beigegeben sind. Sie berechnet die Verzögerungen, die jedes Signal zusätzlich erfahren muss, damit alle Signale wieder zueinander ausgerichtet sind. Dazu werden Werte der Verzögerungen über die Leitungen 54a, b der Auswerteeinheit 70 zugeführt. Diese ermittelt die maximale Verzögerung unter den eingegebenen Verzögerungswerten. Ueber Leitung 74 gibt diese einen maximalen Wert aus, der mindestens so gross ist wie die grösste ermittelte Verzögerung. In der Addiereinheit 71 werden die einzelnen Werte der Verzögerungen von diesem maximalen Wert aus Leitung 14 abgezählt und das Resultat über die Leitungen 73a, b an das digitale Filter 72 abgegeben. Falls die Werte der Verzögerungen in der einen oder beiden Leitungen 54a und 54b sich rasch ändern, so werden diese zeitlichen Aenderungen abgeschwächt oder ausgeglichen. Dies geschieht im Filter 72. Solche Angleichsverzögerungswerte werden den Verzögerungseinheiten 48a, 48b über Leitungen 55a, 55b zugeführt. Ganzzahlige Angleichsverzögerungen können in einfachen Verzögerungsschaltungen mit RAM-Speichern, wie sie in der digitalen Audiotechnik und anderswo üblich sind, realisiert werden. Verzögerungen um Bruchteile von Abtastwerten können mit entsprechend programmierten digitalen Filtern realisiert werden, wie ebenfalls seit längerem bekannt. Dazu gelangen Angleichsverzögerungswerte zuerst in den Speicher 56. Solche Angleichsverzögerungswerte bestehen beispielsweise aus einem 16 Bit Wort, dessen acht wesentlichste Bit (MSB) die Verzögerung um ganze Abtastwerte und deren acht weitere Bit (LSB) den Bruchteil eines Abtastwertes angeben. Die wesentlichsten Bit gelangen über die Leitung 55a,b in den Speicher 56, die weitern Bit direkt in den Rechner 57. Die acht wesentlichsten Bit definieren somit eine Eingangsadressenfolge und eine Ausgangsadressenfolge für den Speicher 56, die acht weiteren Bit definieren die zu verwendenden Filterkoeffizienten des Filters oder Rechners 57. Auf diese Weise wird die Verzögerung in den Verzögerungeinheiten 48a,b gesteuert.

## Patentansprüche

1. Verfahren zum Herstellen und wahlweisen Ausgleichen einer zeitlichen Beziehung zwischen verschiedenen Signalfolgen von digitalen Daten, dadurch gekennzeichnet, dass der einen der Signalfolgen (9) von digitalen Daten zusätzliche Signale (58, 59, 69) mit einem Wert beigegeben werden, der die momentane zeitliche Beziehung zweier bestimmter Signale (18 und 24) der verschiedenen Signalfolgen (9, 10) angibt, die zu einer Zeit existiert, bevor die zusätzlichen Signale beigegeben werden.

2. Verfahren gemäss Anspruch 1, dadurch gekennzeichnet, dass die zusätzlichen Signale (69) zur Steuerung einer Zeitverzögerung für mindestens eine der Signalfolgen (9, 10) von digitalen Signalen verwendet wird.

3. Verfahren gemäss Anspruch 1, dadurch gekennzeichnet, dass die zusätzlichen Signale (58, 59) einerseits den digitalen Signalen der Signalfolge (9) und andererseits einer weiteren Signalfolge (11) beigegeben werden.

4. Verfahren gemäss Anspruch 1, dadurch gekennzeichnet, dass die zusätzlichen Signale (58, 59) einer weiteren, zu den verschiedenen Signalfolgen (9, 10) zusätzlichen Signalfolge (11) beigegeben werden.

5. Verfahren gemäss Anspruch 1, dadurch gekennzeichnet, dass als zusätzliches Signal eine Markierung (58, 59) vorgesehen ist, die die zeitliche Nachbarschaft von Signalen in den verschiedenen Signalfolgen (9, 10) anzeigt.

6. Verfahren gemäss Anspruch 1 und 4, dadurch gekennzeichnet, dass als zusätzliches Signal eine Angabe (69) vorgesehen ist, die den Abstand (64) benachbarter Signale (18, 24) der verschiedenen Signalfolgen angibt.

7. Verfahren gemäss Anspruch 1 und 2, wobei die Signalfolgen (9, 10) auf einem bandförmigen Aufzeichnungsträger (25) aufgezeichnet werden und gemäss einem DASH-Format formatiert sind, dadurch gekennzeichnet, dass die zusätzlichen Signale (58, 59, 69) in einem Synchronisationswort (3) eines Blockes (2) untergebracht werden.

8. Verfahren gemäss Anspruch 2, wobei die Signalfolgen auf einen bandförmigen Aufzeichnungsträger (25) aufgezeichnet werden und gemäss einem DASH-Format formatiert sind und neben Signalfolgen mit digitalen Audiosignalen (9) eine Signalfolge mit einem Zeitcode (10) und eine Signalfolge mit Referenzsignalen (11) vorgesehen sind, dadurch gekennzeichnet, dass zusätzliche Signale (69) zur Steuerung der Zeitverzögerung den Audiosignalen und den zusätzlichen Signalen zur momentanen zeitlichen Relation zweier Signale, den Audiosignalen (12 ,13 ,14, 15) und den Referenzsignalen (22) beigegeben werden.

9. Vorrichtung zum Ausgleichen von Zeitverzögerungen zwischen Signalfolgen von digitalen Daten, wobei für jede Signalfolge ein Wiedergabekanal (43, 44) vorgesehen ist, der einen Synchronisationswortdetektor (47a, 47b) aufweist, dadurch gekennzeichnet, dass der Synchronisationswortdetektor auch zusätzliche digitale Signale detektiert, die den digitalen Daten beigegeben sind, dass jedem Wiedergabekanal (43, 44) ein Verzögerungsdeformatierer (51a, 51b) zugeordnet ist, der den zusätzlichen digitalen Signalen Verzögerungswerte zuordnet, dass mindestens je zwei Wiedergabekanälen gemeinsam eine Verzögerungssteuerung (53) vorgesehen ist, die mit den Verzögerungsdeformatierern (51a, 51b) und Verzögerungseinheiten (48a, 48b) der Wiedergabekanäle (43, 44) verbunden ist und die Verzögerungswerte für die Verzögerung der Signalfolgen in den Verzögerungseinheiten (48a, 48b) abgibt.

10. Vorrichtung gemäss Anspruch 9, dadurch gekennzeichnet, dass die Verzögerungssteuerung (53) aus einem Speicher (56) und einem Rechner (57) besteht.

11. Vorrichtung gemäss Anspruch 10, dadurch gekennzeichnet, dass der Rechner (57) als digitales Filter ausgebildet ist.

## Claims

1. A method of producing and selectively equalizing a temporal relationship between different signal sequences of digital signals, characterized by adding additional signals (58, 59, 69) to one of the signal sequences (9) of digital signals, said additional signals having a value indicating the momentary temporal relationship existing between two predetermined signal sequences (18 and 24) of the different signal sequences (9, 10) at a time prior to adding the additional signals.

2. The method as defined in claim 1, characterized by using the additional signals (69) for controlling a time delay of at least one of said different signal sequences (9, 10) of digital signals.

3. The method as defined in claim 1, characterized by adding the additional signals (58, 59) to the digital signals of the signal sequence (9) and to a further signal sequence (11).

4. The method as defined in claim 1, characterized by adding the additional signals (58, 59) to a further signal sequence (11) which is added to the different signal sequences (9, 10).

5. The method as defined in claim 1, characterized by using marks (58, 59) as additional signals, whereas said marks indicate temporal proximity of signals in said different signal sequences.

6. The method as defined in claim 1 and 4, characterized by selecting an additional signal (69) which is indicative of the space (64) between adjacent signals (18, 24) of said different signal sequences.

7. The method as defined in claim 1 and 2, whereas the different signal sequences (9, 10) are recorded on a tapelike record carrier (25) and formatted in accordance with the DASH-format, characterized by accomodating the additional signals (58, 59, 69) in a synchronizing word (3) of a block (2).

8. The method as defined in claim 2, whereas the signal sequences are recorded on a tape-like record carrier (25) and formatted in accordance with the DASH-format and whereas a signal sequence constituting a time code signal (10) and a signal sequence composed of reference signals (11) are located adjacent to signal sequences composed of digital audio signals, characterized by adding additional signals (69) for controlling the time delay to the audio signals (12, 13, 14, 15), to the additional signals indicative of the momentary temporal relationship between two signals, and to the reference signals (22).

9. Apparatus for equalizing temporal delays between signal sequences of digital data, comprising for each signal sequence a reproduction channel (43, 44) with a synchronization detector (47a, 47b), characterized by the synchronization detector detecting also additional digital signals which are added to the digital data, by a deformatting unit (51a, 51b) associated with each reproduction channel and which associates magnitudes of time delays to the additional digital signals, by a single time delay control (53) associated to at least each two reproduction channels whereby said time delay control is connected to deformatting units (51a, 51b) and to delay units (48a, 48b) associated to the reproduction channels (43, 44) and said time delay control producing magnitudes of time delays for delaying the signal sequences in the delay units (48a, 48b).

10. The apparatus as defined in claim 9, characterized by a delay control (53) composed of a storage (56) and a processor (57).

11. The apparatus as defined in claim 10, characterised by a processor (57) constituted by a digital filter.

## Revendications

1. Procédé pour produire et compenser au choix une relation temporelle entre différentes séquences de signaux numériques, caractérisé par le fait que des signaux supplémentaires (58, 59, 69) sont ajoutés à l'une des séquences de signaux numériques (9) et où la valeur des signaux supplémentaires indique la relation temporelle qui existe entre deux signaux (18 et 24), chacun appartenant à l'une des séquences (9, 10), avant d'ajouter des signaux supplémentaires.

2. Procédé selon la revendication 1, caractérisé par le fait que les signaux supplémentaires (69) sont utilisés pour commander un retard appliqué à au moins une des séquences (9, 10) de signaux numériques.

3. Procédé selon la revendication 1, caractérisé par le fait que les signaux supplémentaires (58, 59) sont ajoutés d'une part aux signaux numériques de la séquence de signaux numériques (9) et d'autre part à une autre séquence (11).

4. Procédé selon la revendication 1, caractérisé par le fait que les signaux supplémentaires (58, 59) sont ajoutés à une autre séquence (11) supplémentaire aux différentes séquences (9, 10).

5. Procédé selon la revendication 1, caractérisé par le fait qu'une marque (58, 59) est prévue comme signal supplémentaire qui indique le voisinage temporel de signaux dans les différentes séquences.

6. Procédé selon les revendications 1 et 4, caractérisé par le fait qu'une indication (69) est prévue comme signal supplémentaire qui indique la distance (64) entre des signaux (18, 24) voisins des différentes séquences.

7. Procédé selon les revendications 1 et 2, où les séquences (9, 10) sont enregistrées sur un support d'enregistrement en forme de bande (25) selon un format DASH, caractérisé en ce que les signaux supplémentaires (58, 59, 69) sont placés dans un mot de synchronisation (3) d'un bloc (2).

8. Procédé selon la revendication 2, où les séquences sont enregistrées sur un support d'enregistrement sous forme de bande (25) selon un format DASH et où une séquence de signaux composant un code temporel (10) et une séquence de signaux comprenant des signaux de référence (11) sont prévues à côté des séquences de signaux audio-numériques (9), caractérisé par le fait que des signaux supplémentaires (69) sont ajoutés aux signaux audio (12, 13, 14, 15) et aux signaux de référence (22) pour commander le retard par rapport aux signaux audio-numériques.

9. Dispositif pour compenser des retards entre des séquences de signaux numériques, où un canal de reproduction (43, 44) est prévu pour chaque séquence, et où chaque canal de reproduction (43, 44) comprend un détecteur de mots de synchronisation (47a, 47b), caractérisé par le fait que le détecteur de mots de synchronisation est fait pour détecter des signaux numériques supplémentaires qui sont ajoutés aux signaux numériques, qu'une unité (51a, 51b) pour déformater le retard qui adjoint des valeurs de retard aux signaux supplémentaires est prévue pour chaque canal de reproduction (43, 44) qu'une unité de commande (53) commune est prévue pour au moins chaque paire de canaux de reproduction, qui est reliée aux unités (51a, 51b) pour déformater ainsi qu'à des unités de retardement (48a, 48b) dans les canaux de reproduction (43, 44) et qui émet des valeurs de retard pour retarder les séquences dans les unités de retardement.

10. Dispositif selon la revendication 9, caractérisé par le fait que l'unité de commande (53) est composé d'une mémoire (56) et d'un processeur (57).

11. Dispositif selon la revendication 10, caractérisé par le fait que le processeur (57) est un filtre numérique.

Fig.1

3
69
58 59
3
2
1
69          69          69          69
2a          2b          2c          2d
4
60 65 67
5
6 61 66 68          7          8

63
16          24          17
12          13          14          15          9
64          20
19 18                              10
21          23          60 65 67 22          11
61 66 68
Fig.2

Fig.3

EP 0 175 941 B1

Fig. 4

3

55 a,b

48

50a,b

56    57

Fig.5

54a

70

74

53

54b

72

55a

73a

71

73b

55b

Fig. 6

4